# EUROPEAN PATENT SPECIFICATION

(11) **EP 3 279 029 B1**
(45) Date of publication and mention of the grant of the patent: **17.07.2019**
(21) Application number: 17184330.3
(22) Date of filing: 01.08.2017
(51) Int. Cl.: B60N 2/22, B60N 2/16, B60N 2/68, B60N 2/70, B60N 2/64

(54) **VEHICLE SEAT WITH ADJUSTABLE ERGONOMIC SEATBACK**
FAHRZEUGSITZ MIT VERSTELLBARER ERGONOMISCHER RUECKENLEHNE
SIÈGE DE VÉHICULE AVEC DOSSIER ERGONOMIQUE AJUSTABLE

(30) Priority: 01.08.2016 JP 2016151319
(43) Date of publication of application: 07.02.2018
(73) Proprietor: TOYOTA JIDOSHA KABUSHIKI KAISHA, Toyota-shi, Aichi 471-8571 (JP)
(72) Inventor: KATOH, Kohshi, Toyota-shi, Aichi 471-8571 (JP)
(74) Representative: Intès, Didier Gérard André

(56) References cited:
- EP-A1- 0 046 892
- US-A1- 2015 239 381

## Description

### CROSS REFERENCE TO RELATED APPLICATIONS

The present application claims the benefit of priority to Japanese Patent Application No. 2016-151319 filed on August 1, 2016 with the Japanese Patent Office, to which the man skilled in the art can refer when reading the present application.

### BACKGROUND

### Field of the Disclosure

Embodiments of the present disclosure relate to a vehicle seat having a seat base frame.

### Discussion of the Related Art

Vehicle seats are required to hold an occupant stably in natural posture. However, a driver moves his/her body when turning a steering wheel, when moving a shift lever etc., and a passenger is swayed by a lateral load during turning. For example, U.S. publication US2015/239381 A1 describes an example of a vehicle seat comfortably holding an occupant with a movement of the occupant while saving a manufacturing cost. In the vehicle seat taught by US2015/239381 A1, a net is stretched within a seat backrest frame. In the seat backrest frame, a connection member is located at a vertical center of the seat backrest frame, and a plurality of strings are arranged radially around the connection member. According to the teachings of US2015/239381 A1, rigidity of the string in the axial direction is high, but rigidity of the string in the bending direction is low.

If a driver turns a steering wheel of the vehicle, one of his/her arm is moved to an upper region of the steering wheel, and the other arm is moved to a lower region of the steering wheel. Consequently, one of his/her shoulders is pulled ahead and the other shoulder is pulled backwardly by the twisting motion of himself/herself.

According to the teachings of US2015/239381 A1, the connection member is arranged at a horizontal center of the seat backrest frame to be opposed to a portion of the occupant between scapulae so that the occupant is allowed to twist his/her upper body with respect to the connection member when turning a steering wheel or when subjected to a lateral load. For this reason, in the vehicle seat taught by US2015/239381 A1, the upper body of the occupant may be held tightly but flexibly.

However, various kinds of occupant sits on the vehicle seat. Therefore, it is preferable to adjust a vertical position of the connection member depending on physical constitution of the occupant to hold the upper body of occupant properly.

### SUMMARY

Aspects of the present disclosure have been conceived noting the foregoing technical problems, and it is therefore an object of the present disclosure is to provide a vehicle seat in which a vertical position of a hub member of a backrest can be adjusted in accordance with physical constitution of an occupant. The invention is defined by the features set forth in independent claim 1, with additional features thereof being disclosed in the dependent claims.

Embodiments of the present disclosure relates to a vehicle seat, comprising: a seatback frame; a hub assembly situated within the seatback frame; and a plurality of strings drawn radially between the hub assembly and the seatback frame. In order to achieve the above-explained objective, according to the embodiments of the present disclosure, the hub assembly includes a hub member having a plurality of through holes for letting through the strings, and an adjuster mechanism that adjusts a vertical position of the hub member.

In a non-limiting embodiment, the adjuster mechanism may include a guide mechanism that guides the hub member in a vertical direction, and a positioning mechanism that fixes the vertical position of the hub member.

In a non-limiting embodiment, the guide mechanism may include a first guide string and a second guide string drawn vertically within the seatback frame a first sheave having a first groove, a second sheave having a second groove, and a supporting member that supports the hub member, the first sheave and the second sheave coaxially. In addition, the first guide string may be wound around the first groove of the first sheave, and the second guide string may be wound around the second groove of the second sheave.

In a non-limiting embodiment, an upper end of the first guide string may be attached to the upper lateral portion of the seatback frame, and a lower end of the first guide string may be attached to a lower lateral portion of the seatback frame within a right region of the seatback frame. On the other hand, an upper end of the second guide string may be attached to the upper lateral portion of the seatback frame, and a lower end of the second guide string may be attached to the lower lateral portion of the seatback frame within a left region of the seatback frame. In addition, an intermediate portion of the first guide string may be wound around the first groove of the first sheave in a predetermined direction, and an intermediate portion of the second guide string may be wound around the second groove of the second sheave in an opposite direction.

In a non-limiting embodiment, the hub member may include a cage member having a front annular frame, a rear annular frame and the through holes formed between the front annular frame and the rear annular frame. In addition, the rear annular frame may be fitted onto the supporting member of the first sheave in a rotatable manner.

In a non-limiting embodiment, the positioning mechanism may include coupling members that are engaged with each other to cancel rotational forces of the first sheave and the second sheave.

In a non-limiting embodiment, the coupling members may include a first gear formed on one face of the first sheave, and a second gear formed on one face of the second sheave to be opposed to the first gear. In addition, the first gear and the second gear may be engaged with each other by bringing the first sheave and the second sheave into contact to each other in an axial direction.

According to the embodiments of the present disclosure, therefore, a vertical position of the hub assembly may be adjusted accurately and easily along the guide mechanism by the adjuster mechanism in accordance with physical constitution of an occupant. In addition, since the hub member, the first sheave and the second sheave are supported coaxially by the supporting member, the adjuster mechanism may be operated easily to adjust the vertical position of the hub assembly.

In addition, the hub assembly may be guided by the first guide string and the second guide string drawn vertically within the seatback frame without requiring a complex mechanism. Moreover, the vertical position of the hub assembly may be adjusted easily by merely rotating the first sheave and the second sheave. Further, since the hub member may be fitted onto the first sheave, the hub assembly may be assembled easily.

In addition, a vertical movement of the hub assembly may be fixed by engaging the first gear of the first sheave and the second gear of the second sheave without requiring a complex mechanism. For this reason, the adjuster mechanism may be simplified and downsized.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Fig. 1 is a perspective view showing the vehicle seat according to at least one embodiment of the present application;
Fig. 2 is a front view of the seatback, in accordance with some embodiments;
Fig. 3 is a cross-sectional view showing a connection between an end portion of the string and the frame;
Fig. 4 is an exploded view showing elements of the adjuster mechanism for adjusting a position of the hub member, in accordance with some embodiments;
Fig. 5 is a cross-sectional view showing a cross-section of the seatback frame in the width direction;
Fig. 6 is a front view of the seatback frame showing a vertical movement of the hub member;
Fig. 7 is an exploded view showing elements of the adjuster mechanism for adjusting a position of the hub member, in accordance with some embodiments;
Fig. 8 is a perspective view showing the coupling members, in accordance with some embodiments;
Fig. 9 is a perspective view showing the adjuster mechanism, in accordance with some embodiments; and
Fig. 10 is a perspective view showing the hub member, in accordance with some embodiments.

### DETAILED DESCRIPTION OF SOME EMBODIMENTS

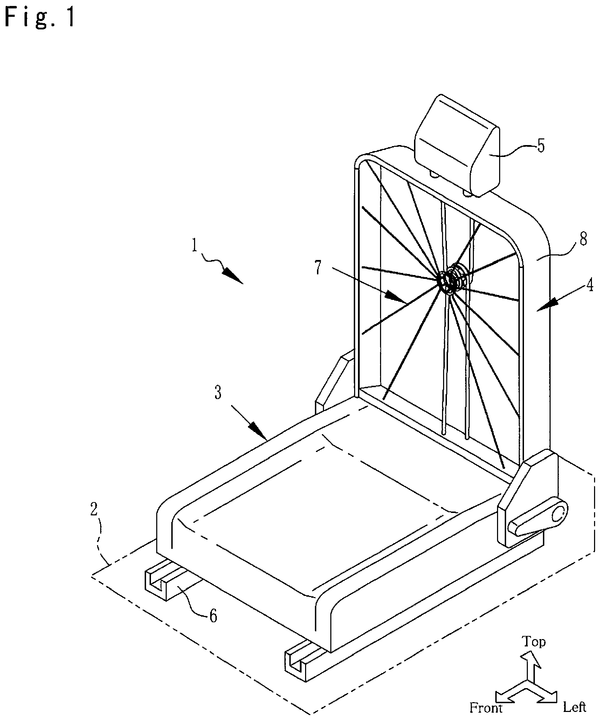

Example embodiments of the present application will now be explained with reference to the accompanying drawings. Turning now to Fig. 1, there is shown a structure of a vehicle seat 1 according to at least one embodiment of the present application. As illustrated in Fig. 1, the vehicle seat 1 is disposed in a cabin 2, and contoured to hold one person. The vehicle seat 1 is used in some embodiments not only as a driver's seat but also as a passenger's seat, e.g., a front passenger seat.

The vehicle seat 1 comprises a seat base 3, a seatback 4, and a headrest 5. The seat base 3 for supporting an occupant hip is mounted on a pair of rails 6 so that a longitudinal position of the vehicle seat 1 is adjustable in a vehicle. The seatback 4 is erected on a rear end of the seat base 3, and a net 7 serving as a backrest is formed within the seatback 4 to hold a back of the occupant. The headrest 5 for supporting a head of the seated occupant is coupled with seatback 4 above the net 7.

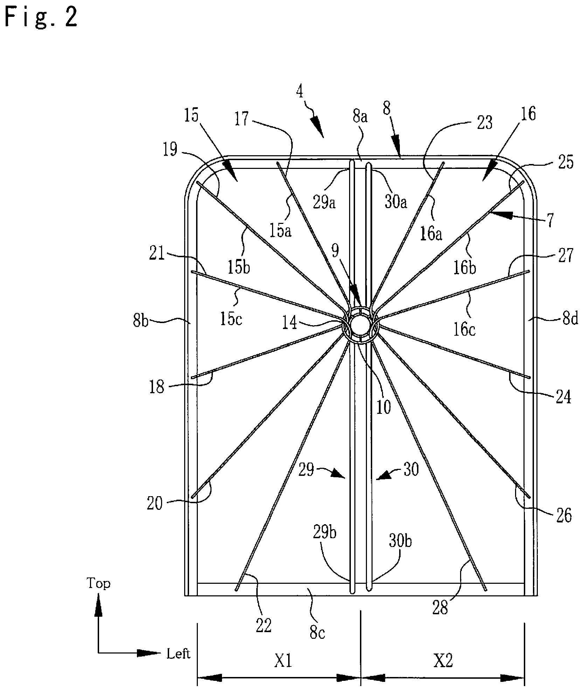

A front view of the seatback 4 is shown in Fig. 2 in more detail. The seatback 4 comprises a seatback frame 8, a hub assembly 9, and the net 7. Rigidity, configuration, structure, material etc. of the seatback frame 8 may be altered and adjusted arbitrarily according to need. For example, the seatback frame 8 may be formed not only integrally but also formed by assembling rods or bar members.

The hub assembly 9 comprises a hub member 10 as a annular cage member having a plurality of through holes 14 for letting through right strings 15 and left strings 16 of the net 7. Specifically, the hub assembly 9 is situated at a predetermined level of width center of the seatback frame 8, and the right strings 15 and the left strings 16 are radially drawn within the seatback frame 8 while being threaded through the through holes 14 of the hub member 10 to form the net 7.

The seatback frame 8 is divided into a right region X1 and a left region X2 across a right guide string 29 as a first guide string and a left guide string 30 as a second guide string, and the right strings 15 are drawn within the right region X1 and the left strings 16 are drawn within the left region X2. Specifically, in the right region X1, one end 17 of a first right string 15a is attached to an upper lateral portion 8a of the seatback frame 8. An intermediate portion of the first right string 15a is threaded through one of the through holes 14 of the hub member 10, and other end 18 of the first right string 15a is attached to an intermediate portion of a right vertical portion 8b of the seatback frame 8. One end 19 of a second right string 15b is attached to a corner between the upper lateral portion 8a and the right vertical portion 8b of the seatback frame 8. An intermediate portion of the second right string 15b is also threaded through another one of the through holes 14 of the hub member 10, and other end 20 of the second right string 15b is attached to a lower portion of the right vertical portion 8b of the seatback frame 8. One end 21 of a third right string 15c is attached to an upper portion of the right vertical portion 8b of the seatback frame 8. An intermediate portion of the third right string 15c is also threaded through another one of the through holes 14 of the hub member 10, and other end 22 of the third right string 15c is attached to a lower lateral portion 8c of the seatback frame 8.

Likewise, in the left region X2, one end 23 of a first left string 16a is attached to the upper lateral portion 8a of the seatback frame 8. An intermediate portion of the first left string 16a is threaded through another one of the through holes 14 of the hub member 10, and other end 24 of the first left string 16a is attached to an intermediate portion of a left vertical portion 8d of the seatback frame 8. One end 25 of a second left string 16b is attached to a corner between the upper lateral portion 8a and the left vertical portion 8d of the seatback frame 8. An intermediate portion of the second left string 16b is also threaded through another one of the through holes 14 of the hub member 10, and other end 26 of the second left string 16b is attached to a lower portion of the left vertical portion 8d of the seatback frame 8. One end 27 of a third left string 16c is attached to an upper portion of the left vertical portion 8d of the seatback frame 8. An intermediate portion of the third left string 16c is also threaded through another one of the through holes 14 of the hub member 10, and other end 28 of the third left string 16c is attached to the lower lateral portion 8c of the seatback frame 8. Thus, in the seatback frame 8, the right strings 15 and the left strings 16 are drawn symmetrically across the right guide string 29 and the left guide string 30. Here, each of the right strings 15 and the left strings 16 are inserted into each of the through holes 14 from the front side.

The right strings 15 and the left strings 16 are formed of elastic string material or stranded elastic string material individually having a round cross-section so that the net 7 may be stretched by the perpendicular load applied from the occupant's back. Materials, diameters, configurations and lengths etc. of the string material may be altered to achieve a required tensile strength of the net 7. In addition, numbers of the right strings 15 and the left strings 16 may also be altered according to need.

As a bucket seat or a semi-bucket seat, the net 7 serving as a backrest is contoured in such a manner as to hold especially an upper body of the occupant tightly while allowing the occupant to move flexibly when, e.g., subjected to lateral acceleration during turning. In order to allow the net 7 to be deformed easily with the twisting motion of the occupant around the hub assembly 9, lengthwise stiffness of the right strings 15 and the left strings 16 may be increased while reducing bending strength of the right strings 15 and the left strings 16. Consequently, the occupant is allowed to twist his/her upper body when subjected e.g., to the lateral acceleration during turning.

The right strings 15 and the left strings 16 may be attached to the seatback frame 8 not only directly but also indirectly through a hook or stopper member.

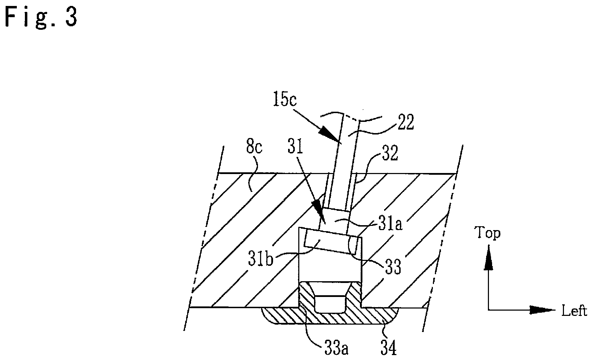

An example of a connection between the other end 22 of the third right string 15c and the lower lateral portion 8c of the seatback frame 8 is shown in Fig. 3. As illustrated in Fig. 3, a stopper member 31 is attached to the other end 22 of the third right string 15c. Specifically, the stopper member 31 comprises a ring portion 31a to which the other end 22 of the third right string 15c is fixedly inserted, and a head portion 31b that is diametrically larger than the ring portion 31a. In the lower lateral portion 8c of the seatback frame 8, a shaft hole 32 is formed to open to inside of the seatback frame 8, and a diametrically larger bore 33 is formed to open to outside of the seatback frame 8. The head portion 31b of the stopper member 31 is inserted into the bore 33 from below to be fitted with the other end 22 of the third right string 15c thereby preventing detachment of the third right string 15c from the lower lateral portion 8c of the seatback frame 8. A cap 34 made of flexible material is fitted into an opening 33a of the bore 33 to close the bore 33. Other strings 15 and 16 may also be attached to the seatback frame 8 by the same principle.

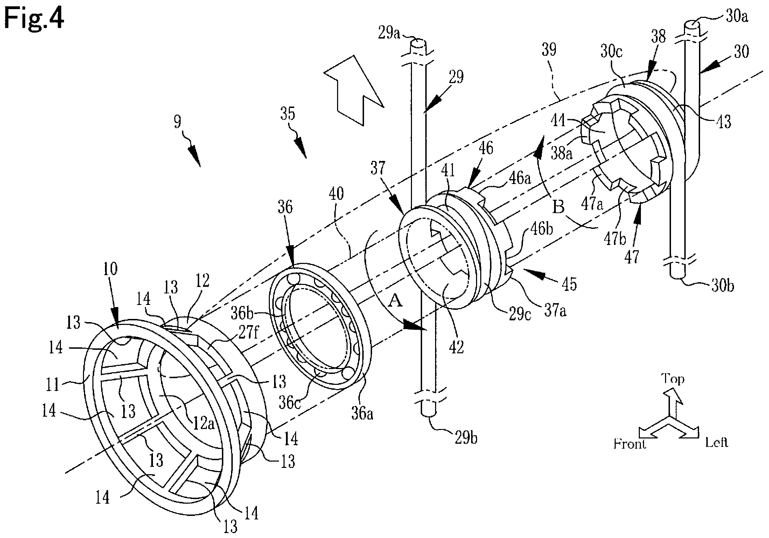

The hub assembly 9 is provided with an adjuster mechanism 35, and elements of the hub assembly 9 are shown in Fig. 4 in more detail. The adjuster mechanism 35 is adapted to adjust a vertical level of the hub member 10 at the width center of the seatback frame 8. To this end, the adjuster mechanism 35 comprises: a guide mechanism including the right guide string 29, the left guide string 30, a front sheave 37 as a first sheave, and a rear sheave 38 as a second sheave; a bearing 36; and a rubber ring 39. The bearing 36, the front sheave 37 and the rear sheave 38 are aligned tandemly along a center axis of the hub member 10. Specifically, the bearing 36 includes an outer race 36a, an inner race 36b and a plurality of rolling elements 36c.

The hub member 10 comprises a front annular frame 11, a rear annular frame 12, and a plurality of columns 13 formed between the front annular frame 11 and the rear annular frame 12 at regular intervals in the circumferential direction. Each clearance between the adjacent columns 13 individually serves as the through hole 14 to which the right string 15 or the left string 16 is inserted. The bearing 36 is fitted into an inner circumference 12a of the rear annular frame 12 from behind, and a cylinder 40 protruding forward from the front sheave 37 is inserted into the inner race 36b of the bearing 36. Thus, the hub member 10 is joined to the front sheave 37 of the adjuster mechanism 35 in a rotatable manner through the bearing 36.

Here, the bearing 36 may be omitted according to need. In this case, the hub member 10 is directly fitted onto the cylinder 40 of the front sheave 37 while being allowed to rotate but restricted to reciprocate in the axial direction. The number and intervals of the columns 13 may be altered arbitrarily according to need. In addition, the hub member 10 may also be formed into an oval shape. In this case, the hub member 10 is situated in such a manner that a chief axis (i.e., a longer axis) thereof extends vertically so that the string 15 or 16 may be inserted easily into the through hole 14.

In order to vertically guide the hub member 10, the right guide string 29 and the left guide string 30 are drawn between the upper lateral portion 8a and the lower lateral portion 8c along the width center of the seatback frame 8. The right guide string 29 and the left guide string 30 individually have a round cross-section and a larger diameter than those of the right strings 15 and the left strings 16. That is, tensile strengths of the right guide string 29 and the left guide string 30 are higher than those of the right strings 15 and the left strings 16.

The front sheave 37 has a first groove 41 formed on an outer circumferential face of the front sheave 37, and a first center hole 42 penetrating through the front sheave 37 in the axial direction. Specifically, a width of the first groove 41 is twice as much as a diameter of the right guide string 29. An upper end 29a of the right guide string 29 is attached to the upper lateral portion 8a of the seatback frame 8. An intermediate portion 29c of the right guide string 29 is wound counterclockwise (i.e., in the direction A in Fig. 4) around the first groove 41 of the front sheave 37 once, and a lower end 29b of the right guide string 29 is attached to the lower lateral portion 8c of the seatback frame 8. That is, the front sheave 37 is moved upwardly along the right guide string 29 by rotating the front sheave 37 counterclockwise. By contrast, the front sheave 37 is moved downwardly along the right guide string 29 by rotating the front sheave 37 clockwise.

Likewise, the rear sheave 38 has a second groove 43 formed on an outer circumferential face of the rear sheave 38, and a second center hole 44 penetrating through the rear sheave 38 in the axial direction. Specifically, a width of the second groove 43 is twice as much as a diameter of the left guide string 30. An upper end 30a of the left guide string 30 is attached to the upper lateral portion 8a of the seatback frame 8. An intermediate portion 30c of the left guide string 30 is wound clockwise (i.e., in the direction B in Fig. 4) around the second groove 43 of the rear sheave 38 once, and a lower end 30b of the left guide string 30 is attached to the lower lateral portion 8c of the seatback frame 8. That is, the rear sheave 38 is moved upwardly along the left guide string 30 by rotating the rear sheave 38 clockwise. By contrast, the rear sheave 38 is moved downwardly along the left guide string 30 by rotating the rear sheave 38 counterclockwise.

Specifically, the upper end 29a of the right guide string 29 is attached to the upper lateral portion 8a of the seatback frame 8 and the lower end 29b of the right guide string 29 is attached to the lower lateral portion 8c of the seatback frame 8 within the right region X1. By contrast, the upper end 30a of the left guide string 30 is attached to the upper lateral portion 8a of the seatback frame 8 and the lower end 30b of the left guide string 30 is attached to the lower lateral portion 8c of the seatback frame 8 within the left region X2. The right guide string 29 and the left guide string 30 are formed of same elastic string material or stranded elastic string material. Materials, diameters, configurations and lengths etc. of the right guide string 29 and the left guide string 30 may be altered to adjust a friction between the guide string and the sheave.

Alternatively, the first groove 41 may also be formed in such a manner as to have a width similar to the diameter of the right guide string 29, and the second groove 43 may also be formed in such a manner as to have a width similar to the diameter of the left guide string 30. In this case, the first groove 41 wraps around the outer circumferential face of the front sheave 37 at least twice to form a left-handed helix, and the second groove 43 wraps around the outer circumferential face of the rear sheave 38 at least twice to form a right-handed helix.

The adjuster mechanism 35 further comprises a positioning mechanism 45 for fixing a vertical position of the hub assembly 9. To this end, the positioning mechanism 45 is provided with coupling members such as a front gear 46 as a first gear formed on a rear face 37a of the front sheave 37, and a rear gear 47 as a second gear formed on a front face 38a of the rear sheave 38. Specifically, in the front gear 46, a plurality of ridges 46a and a plurality of grooves 46b are formed alternately in a circular manner. Widths (i.e., circumferential lengths) of the ridges 46a are substantially identical to one another, and widths (i.e., circumferential lengths) of the grooves 46b are substantially identical to one another. Likewise, in the rear gear 47, a plurality of ridges 47a and a plurality of grooves 47b are formed alternately in a circular manner. Widths (i.e., circumferential lengths) of the ridges 47a are substantially identical to one another, and widths (i.e., circumferential lengths) of the grooves 47b are also substantially identical to one another. That is, the width of each of the ridges 46a of the front gear 46 is substantially identical to the width of each of the grooves 47b of the rear gear 47, and the width of each of the ridges 47a of the rear gear 47 is substantially identical to the width of each of the grooves 46b of the front gear 46.

The front gear 46 and the rear gear 47 are engaged with each other by axially moving at least one of the front sheave 37 and the rear sheave 38 in such a manner that the ridges 46a and the ridges 47a are individually mated with the grooves 46b and the grooves 47b. Number of the ridges (or grooves), widths of the ridges and the grooves may be altered according to need. For example, a vertical position of the hub assembly 9 may be adjusted more finely by increasing the number of the ridges and the grooves.

The rubber ring 39 is formed by letting a rubber band through the second center hole 44 of the rear sheave 38, the first center hole 42 of the front sheave 37, and one of the through hole 14 of the hub member 10, and thereafter joining both ends of the rubber band by an appropriate means. That is, the hub member 10, the front sheave 37 and the rear sheave 38 are elastically bundled by the rubber ring 39 while maintaining an engagement between the front sheave 37 and the rear sheave 38. The front sheave 37 and the rear sheave 38 are disengaged by pulling at least one of the front sheave 37 and the rear sheave 38 in the axial direction against an elastic force of the rubber ring 39.

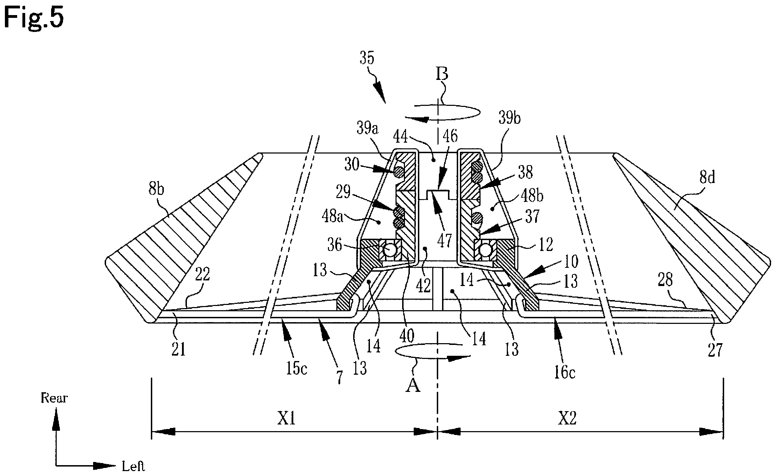

Fig. 5 shows a cross-section of the adjuster mechanism 35 shown in Fig. 4. As illustrated in Fig. 5, the front gear 46 of the front sheave 37 and the rear gear 47 of the rear sheave 38 are normally engaged with each other by a pair of right rubber ring 39a and left rubber ring 39b. In Fig. 5, only the third right string 15c and the third left string 16c are depicted for the sake of illustration. As described, the third right string 15c and the third left string 16c are drawn between the seatback frame 8 and the hub member 10 in a symmetrical manner.

As described, the right guide string 29 is wound counterclockwise (i.e., in the direction A in Fig. 5) around the first groove 41 of the front sheave 37 in such a manner that tension of the right guide string 29 is applied to the front sheave 37 substantially equally in both upwardly and downwardly so that the front sheave 37 is held tightly by the right guide string 29 to stay at the current vertical position. Likewise, the left guide string 30 is wound clockwise (i.e., in the direction B in Fig. 5) around the second groove 43 of the rear sheave 38 in such a manner that tension of the left guide string 30 is applied to the rear sheave 38 substantially equally in both upwardly and downwardly so that the rear sheave 38 is held tightly by the left guide string 30 to stay at the current vertical position. In the hub assembly 9, therefore, the front sheave 37 and the rear sheave 38 are apt to rotate in opposite directions when the hub assembly 9 is subjected to an upward force or downward force. However, since the front gear 46 and the rear gear 47 are engaged with each other, the rotational forces of the front sheave 37 and the rear sheave 38 cancel each other so that the hub assembly 9 is allowed to stay at the current vertical position.

Specifically, the hub member 10, the front sheave 37 and the rear sheave 38 are elastically bundled by the right rubber ring 39a and the left rubber ring 39b at symmetrical portions. However, number of rubber rings 39 may be altered arbitrarily. Alternatively, the rubber ring 39 may also be omitted. In this case, the ridges 46a and the ridges 47a are mated tightly with the grooves 46b and the grooves 47b, and the front sheave 37 is fitted tightly into the hub member 10 through the bearing 36.

Since an outer diameter of the rear annular frame 12 of the hub member 10 is larger than outer diameters of the front sheave 37 and the rear sheave 38, a triangle space 48a is formed within the right rubber ring 39a and a triangle space 48b is formed within the left rubber ring 39b. The right guide string 29 is held in the triangle space 48a without being contacted to the right rubber ring 39a, and the left guide string 30 is held in the triangle space 48b without being contacted to the left rubber ring 39b. For this reason, movements of the right guide string 29 and the left guide string 30 will not be hindered by the right rubber ring 39a and the left rubber ring 39b. Since the right rubber ring 39a and the left rubber ring 39b are threaded through the through holes 14, a rotation of the hub member 10 is restricted by the columns 13. However, rotations of the front sheave 37 and the rear sheave 38 will not be restricted by the columns 13 of the hub member 10.

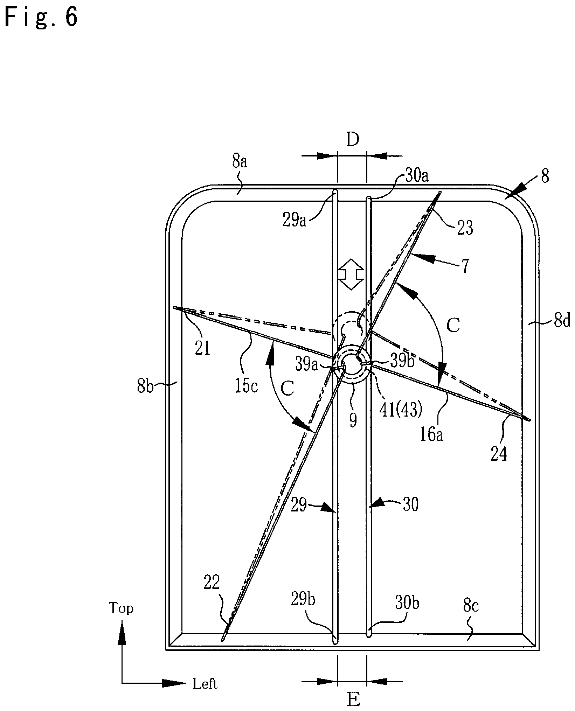

Here will be explained an adjustment of the hub assembly 9 in the vertical direction with reference to Fig. 6. In fig. 6, only the third right string 15c and the first left string 16a are depicted for the sake of illustration. In order to damp pulling forces of the right strings 15 and the left strings 16 in the vertical direction, for example, an internal angle C of the first left string 16a between one end 23 and the other end 24 is adjusted between 80 degrees and 170 degrees, preferably between 90 degrees and 160 degrees. The internal angles C of other strings between the end portions are also adjusted within the above-mentioned ranges. In the vehicle seat 1, therefore, the vertical position of the hub assembly 9 may be adjusted easily. To this end, it is preferable to adjust a clearance D between the upper end 29a of the right guide string 29 and the upper end 30a of the left guide string 30 substantially identical to outer diameters of the first groove 41 of the front sheave 37 and the second groove 43 of the rear sheave 38. Likewise, it is also preferable to adjust a clearance E between the lower end 29b of the right guide string 29 and the lower end 30b of the left guide string 30 substantially identical to the outer diameters of the first groove 41 of the front sheave 37 and the second groove 43 of the rear sheave 38.

Preferably, the hub assembly 9 is situated between shoulder blades of the occupant, but a vertical level of the shoulder blades does not vary considerably from person to person. That is, it is sufficient to adjust the hub assembly 9 within a range shorter than one third of the height of the seatback frame 8. Therefore, the above-mentioned clearances D and E may be increased wider than the outer diameters of the first groove 41 of the front sheave 37 and the second groove 43 of the rear sheave 38. In addition, in order to maintain the hub assembly 9 above the intermediate level of the seatback frame 8, the clearance E may be increased wider than the clearance D.

In order to adjust the vertical level of the hub assembly 9, first of all, the front sheave 37 and the rear sheave 38 are isolated away from each other by hand to disengage the front gear 46 and the rear gear 47 from each other. Then, the vertical level of the hub assembly 9 is adjusted to a level of the shoulder blades by rotating the front sheave 37 and the rear sheave 38 in opposite directions. Thereafter, the front sheave 37 and the rear sheave 38 are released to engage the front gear 46 and the rear gear 47 with each other by the elastic forces of the right rubber ring 39a and the left rubber ring 39b. Consequently, the hub assembly 9 is set at a desired level so that the occupant is allowed to twist his/her upper body easily.

Modification example of the hub assembly and the adjuster mechanism will be explained hereinafter.

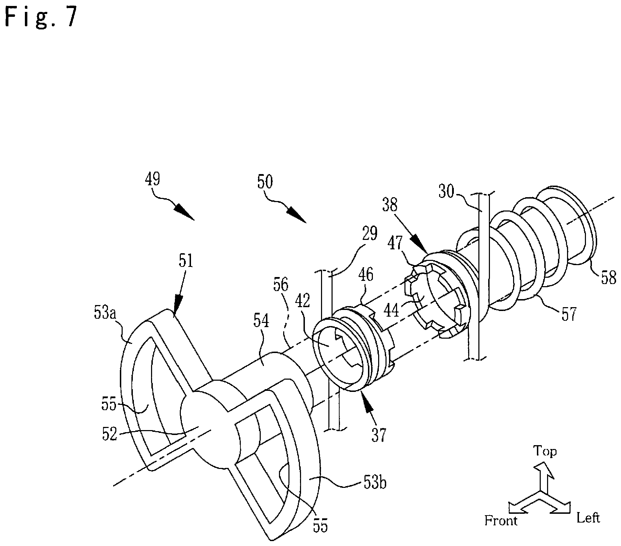

Turning to Fig. 7, there is shown another example of the hub assembly and the adjuster mechanism. According to this other example, a hub assembly 49 comprises a hub member 51, and an adjuster mechanism 50 including the front sheave 37 and the rear sheave 38.

The hub member 51 includes a base portion 52, a right segment 53a and a left segment 53b formed symmetrically to each other across the base portion 52, and a diametrically smaller shaft portion 54 extending toward the rear side from the base portion 52. In the hub member 51, a through hole 55 is formed individually in the right segment 53a and the left segment 53b. According to this other example, the right strings 15 are threaded through the through hole 55 of the right segment 53a, and the left strings 16 are threaded through the through hole 55 of the left segment 53b. A support shaft 56 further extends toward the rear side from a rear end of the shaft portion 54 of the hub member 51 to be inserted into the first center hole 42 of the front sheave 37 and the second center hole 44 of the rear sheave 38. Specifically, the support shaft 56 has a sufficient length to support the front sheave 37 and the rear sheave 38 even when the front sheave 37 and the rear sheave 38 are disengaged from each other. In addition, the front sheave 37 and the rear sheave 38 are allowed to rotate on the support shaft 56. The rear sheave 38 is pushed toward the front sheave 37 by a coil spring 57.

In order to push the rear sheave 38 toward the front sheave 37 thereby maintaining engagement between the front gear 46 and the rear gear 47, a coil spring 57 is also fitted onto the support shaft 56 behind the rear sheave 38, and a stopper plate 58 is attached to a rear end (i.e., a leading end) of the support shaft 56 to prevent detachment of the coil spring 57 from the support shaft 56. According to another example, a vertical level of the hub assembly 49 may be adjusted by the same procedures as the foregoing example.

Number of the segments (i.e., the through holes) of the hub member 51 may be altered arbitrarily according to need. In addition, the support shaft 56 may also be formed integrally with the front sheave 37 or the rear sheave 38 instead of the hub member 51. According to another example, the bearing 36 may be omitted to reduce a manufacturing cost. In addition, since the front sheave 37 and the rear sheave 38 are supported by the support shaft 56 in a rotatable manner, the front sheave 37 and the rear sheave 38 may be rotated easily in opposite directions to adjust the vertical level of the hub member 51 when disengaged from each other. Further, since the rubber ring 39 is not used to bundle the hub member 51 and the adjuster mechanism 50, the hub assembly 49 may be assembled easily.

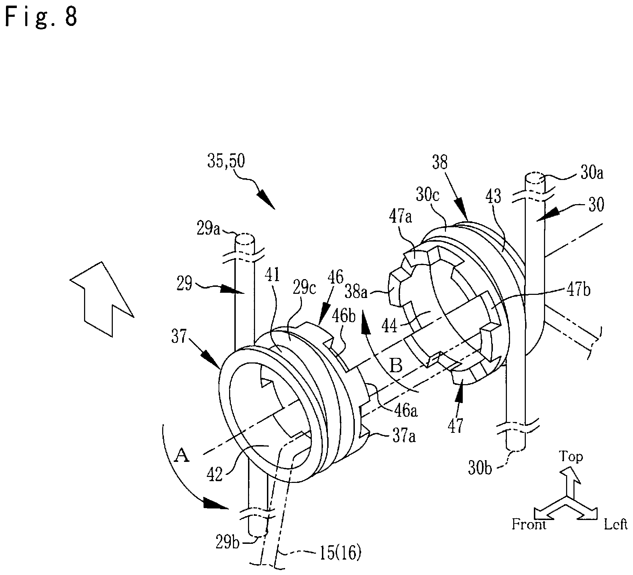

As shown in Fig. 8, the hub members 10 and 51 may be omitted. In Fig. 8, only one of left strings 16 is depicted for the sake of illustration. In this case, the right strings 15 and left strings 16 are threaded through the first center hole 42 of the front sheave 37 and the second center hole 44 of the rear sheave 38. In this case, therefore, the hub assembly may be downsized and the manufacturing cost may be reduced.

Modification example of the right guide string 29 and the left guide string 30 will be explained hereinafter.

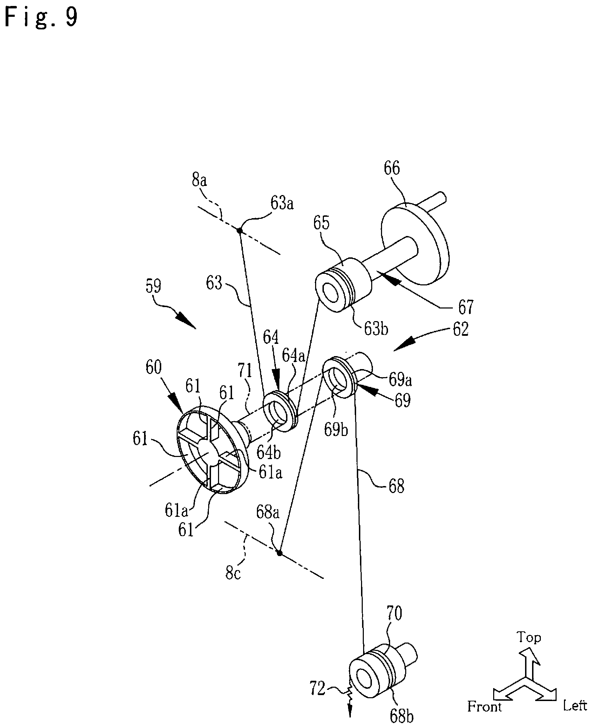

Turning to Fig. 9, there is shown still another example of the hub assembly and the adjuster mechanism. According to this other example, a hub assembly 59 comprises a hub member 60 having a plurality of through holes 61, and an adjuster mechanism 62 for adjusting a vertical position of the hub assembly 59. Specifically, the hub member 60 is a ring member in which an internal space is divided substantially equally into four sections by partition plates 61a to form the through holes 61, and the right strings 15 and the left strings 16 are threaded through the predetermined the through holes 61. The adjuster mechanism 62 comprises a front wire 63, a front sheave 64, a first spool 65, a handle 66, a locking mechanism 67, a rear wire 68, a rear sheave 69, a second spool 70, and a tension spring 72. A groove 64a is formed on an outer circumference of the front sheave 64, and an intermediate portion of the front wire 63 is wound around the groove 64a. One end 63a of the front wire 63 is attached to the upper lateral portion 8a of the seatback frame 8, and other end 63b of the front wire 63 is wound around the first spool 65 arranged in the upper lateral portion 8a of the seatback frame 8. A support shaft 71 extends from the hub member 60 toward the rear side to be inserted into a center hole 64b of the front sheave 64 and a center hole 69b of the rear sheave 69. In other words, the front sheave 64 and the rear sheave 69 are fitted onto the support shaft 71 in a rotatable manner. A groove 69a is also formed on an outer circumference of the rear sheave 69, and an intermediate portion of the rear wire 68 is wound around the groove 69a. One end 68a of the rear wire 68 is attached to the lower lateral portion 8c of the seatback frame 8, and other end 68b of the rear wire 68 is wound around the second spool 70 arranged in the lower lateral portion 8c of the seatback frame 8. The second spool 70 is pulled by the tension spring 72 in a direction to wind the rear wire 68.

The handle 66 is connected to a rear end of the first spool 65 from outside of the vehicle seat 1. Although not especially shown, the locking mechanism 67 includes a click mechanism that locks the position of the first spool 65. That is, a rotational angle of the first spool 65 can be fixed at a plurality of positions by the click mechanism. When the handle 66 is rotated in a predetermined direction by an external force greater than a fixing force of the click mechanism, the first spool 65 is rotated in the same direction as the handle 66. Specifically, when the handle 66 is rotated in the predetermined direction, the first spool 65 is rotated in a direction to wind-up the front wire 63 so that the front sheave 64 is moved upwardly. Consequently, the hub member 60 and the rear sheave 69 are lifted upwardly while rotating in the same direction as the front sheave 64, and the second spool 70 is rotated by the rear wire 68 in a direction to feed the rear wire 68 against the pulling force of the tension spring 72.

When the handle 66 is stopped, the first spool 65 is locked at the current position so that the vertical position of the hub member 60 is fixed. By contrast, when the handle 66 is rotated in the opposite direction, the first spool 65 is rotated in a direction to feed the front wire 63 so that the front sheave 64 is moved downwardly. Consequently, the hub member 60 and the rear sheave 69 are moved upwardly while rotating in the same direction as the front sheave 64, and the second spool 70 is rotated by the tension spring 72 in a direction to rewind the rear wire 68.

The click mechanism may be omitted according to need. In this case, the first spool 65 may be connected to the handle 66 through a self-lock device such as a worm wheel and so on. According to the example shown in Fig. 9, the vertical level of the hub assembly 59 may be adjusted easily by rotating the external handle 66.

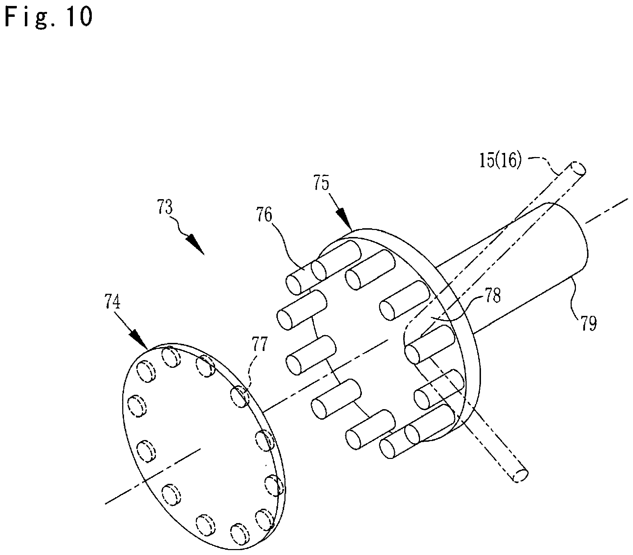

Fig. 10 shows still another example of the hub member. A hub member 73 shown in Fig. 10 comprises a front disc member 74 and a rear disc member 75 having substantially same diameters, and a plurality of the pins 76 erected on the rear disc member 75 in a circular manner at regular intervals. Leading ends of the pins 76 are individually inserted into bores 77 formed on a rear face of the front disc member 74. The pin 76 may be shaped not only into a column shape but also into a cylindrical shape. The right strings 15 and the left strings 16 are individually wrapped or wound around the pins 76 without being fixed. Thus, in the example shown in Fig. 10, each clearance between the pins 76 serves as a through hole 78. A support shaft 79 also extends from a rear face of the rear disc member 75 toward the rear side to support the front sheave 37 and the rear sheave 38 in a rotatable manner.

Number of pins 76, intervals between the pins 76 etc. may be altered arbitrarily according to need. In addition, the pins 76 may also be arranged in an oval manner. Further, a plurality of through holes may also be formed in any one of the disc members instead of pins.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the present invention as far as they remain within its scope as defined by the appended claims.

## Claims

1. A vehicle seat (1), comprising:
a seatback frame (8);
a hub assembly (9, 49, 59) situated within the seatback frame (8); and
a plurality of strings (15, 16) drawn radially between the hub assembly (9, 49, 59) and the seatback frame (8),
**characterized in that**:
the hub assembly (9, 49, 59) includes a hub member (10, 51, 60, 73) having a plurality of through holes (14, 55, 61, 78) for letting through the strings (15, 16), and an adjuster mechanism (35, 50, 62) that is configured to adjust a vertical position of the hub member (10, 51, 60, 73).

2. The vehicle seat (1) as claimed in claim 1, wherein the adjuster mechanism (35, 50, 62) includes:
a guide mechanism (29, 30, 37, 38) that is configured to guide the hub member (10, 51, 60, 73) in a vertical direction; and
a positioning mechanism (45) that is configured to fix the vertical position of the hub member (10, 51, 60, 73).

3. The vehicle seat (1) as claimed in claim 2,
wherein the guide mechanism (29, 30, 37, 38) includes a first guide string (29) and a second guide string (30) drawn vertically within the seatback frame (8), a first sheave (37) having a first groove (41), a second sheave (38) having a second groove (43), and a supporting member (39, 40, 46, 47, 56, 71, 79) that is configured to support the hub member (10, 51, 60, 73), the first sheave (37) and the second sheave (38) coaxially, and
wherein the first guide string (29) is wound around the first groove (41) of the first sheave (37), and the second guide string (30) is wound around the second groove (43) of the second sheave (38).

4. The vehicle seat (1) as claimed in claim 3,
wherein an upper end (29a) of the first guide string (29) is attached to the upper lateral portion (8a) of the seatback frame (8) and a lower end (29b) of the first guide string (29) is attached to a lower lateral portion (8c) of the seatback frame (8) within a right region (X1) of the seatback frame (8),
wherein an upper end (30a) of the second guide string (30) is attached to the upper lateral portion (8a) of the seatback frame (8) and a lower end (30b) of the second guide string (30) is attached to the lower lateral portion (8c) of the seatback frame (8) within a left region (X2) of the seatback frame (8), and
wherein an intermediate portion (29c) of the first guide string (29) is wound around the first groove (41) of the first sheave (37) in a predetermined direction, and an intermediate portion (30c) of the second guide string (30) is wound around the second groove (43) of the second sheave (38) in an opposite direction.

5. The vehicle seat (1) as claimed in claim 4,
wherein the hub member (10, 51, 60, 73) includes a cage member (10) having a front annular frame (11), a rear annular frame (12) and the through holes (14) formed between the front annular frame (11) and the rear annular frame (12), and
wherein the rear annular frame (12) is fitted onto the supporting member (40) of the first sheave (37) in a rotatable manner.

6. The vehicle seat (1) as claimed in claim 4 or 5, wherein the positioning mechanism (45) includes coupling members (46, 47) that are engaged with each other to cancel rotational forces of the first sheave (37) and the second sheave (38).

7. The vehicle seat (1) as claimed in claim 6,
wherein the coupling members (46, 47) include a first gear (46) formed on one face of the first sheave (37), and a second gear (47) formed on one face of the second sheave (38) to be opposed to the first gear (46), and
wherein the first gear (46) and the second gear (47) are engaged with each other by bringing the first sheave (37) and the second sheave (38) into contact to each other in an axial direction.

## Patentansprüche

1. Fahrzeugsitz (1), umfassend:
einen Sitzrückenlehnenrahmen (8),
eine Nabenanordnung (9, 49, 59), die innerhalb des Sitzrückenlehnenrahmens (8) angeordnet ist, und
mehrere Bänder (15, 16), die radial zwischen der Nabenanordnung (9, 49, 59) und dem Sitzrückenlehnenrahmen (8) gespannt sind,
**dadurch gekennzeichnet, dass**:
die Nabenanordnung (9, 49, 59) ein Nabenglied (10, 51, 60, 73), das mehrere Durchgangslöcher (14, 55, 61, 78) zum Durchlassen der Bänder (15, 16) aufweist, und einen Einstellmechanismus (35, 50, 62), der dazu ausgebildet ist, eine senkrechte Position des Nabenglieds (10, 51, 60, 73) einzustellen, umfasst.

2. Fahrzeugsitz (1) nach Anspruch 1, wobei der Einstellmechanismus (35, 50, 62) umfasst:
einen Führungsmechanismus (29, 30, 37, 38), der dazu ausgebildet ist, das Nabenglied (10, 51, 60, 73) in einer senkrechten Richtung zu führen, und
einen Positioniermechanismus (45), der dazu ausgebildet ist, die senkrechte Position des Nabenglieds (10, 51, 60, 73) zu fixieren.

3. Fahrzeugsitz (1) nach Anspruch 2,
wobei der Führungsmechanismus (29, 30, 37, 38) ein erstes Führungsband (29) und ein zweites Führungsband (30), die senkrecht innerhalb des Sitzrückenlehnenrahmens (8) gespannt sind, eine erste Scheibe (37) mit einer ersten Rille (41), eine zweite Scheibe (38) mit einer zweiten Rille (43) und ein Tragglied (39, 40, 46, 47, 56, 71, 79), das dazu ausgebildet ist, das Nabenglied (10, 51, 60, 73), die erste Scheibe (37) und die zweite Scheibe (38) koaxial zu tragen, umfasst, und
wobei das erste Führungsband (29) um die erste Rille (41) der ersten Scheibe (37) geschlungen ist und das zweite Führungsband (30) um die zweite Rille (43) der zweiten Scheibe (38) geschlungen ist.

4. Fahrzeugsitz (1) nach Anspruch 3,
wobei ein oberes Ende (29a) des ersten Führungsbandes (29) an dem Oberseitenabschnitt (8a) des Sitzrückenlehnenrahmens (8) befestigt ist und ein unteres Ende (29b) des ersten Führungsbandes (29) an einem Unterseitenabschnitt (8c) des Sitzrückenlehnenrahmens (8) innerhalb eines rechten Bereichs (X1) des Sitzrückenlehnenrahmens (8) befestigt ist,
wobei ein oberes Ende (30a) des zweiten Führungsbandes (30) an dem Oberseitenabschnitt (8a) des Sitzrückenlehnenrahmens (8) befestigt ist und ein unteres Ende (30b) des zweiten Führungsbandes (30) an dem Unterseitenabschnitt (8c) des Sitzrückenlehnenrahmens (8) innerhalb eines linken Bereichs (X2) des Sitzrückenlehnenrahmens (8) befestigt ist, und
wobei ein Zwischenabschnitt (29c) des ersten Führungsbands (29) in einer vorbestimmten Richtung um die erste Rille (41) der ersten Scheibe (37) geschlungen ist und ein Zwischenabschnitt (30c) des zweiten Führungsbands (30) in einer entgegengesetzten Richtung um die zweite Rille (43) der zweiten Scheibe (38) geschlungen ist.

5. Fahrzeugsitz (1) nach Anspruch 4,
wobei das Nabenglied (10, 51, 60, 73) ein Käfigglied (10) mit einem vorderen ringförmigen Rahmen (11), einem hinteren ringförmigen Rahmen (12) und den Durchgangslöchern (14), die zwischen dem vorderen ringförmigen Rahmen (11) und dem hinteren ringförmigen Rahmen (12) gebildet sind, umfasst, und
wobei der hintere ringförmige Rahmen (12) auf dem Tragglied (40) der ersten Scheibe (37) auf drehbare Weise angebracht ist.

6. Fahrzeugsitz (1) nach Anspruch 4 oder 5, wobei der Positioniermechanismus (45) Kopplungsglieder (46, 47) umfasst, die miteinander in Eingriff gebracht werden, um Drehkräfte der ersten Scheibe (37) und der zweiten Scheibe (38) aufzuheben.

7. Fahrzeugsitz (1) nach Anspruch 6,
wobei die Kopplungsglieder (46, 47) ein erstes Zahnrad (46), das auf einer Fläche der ersten Scheibe (37) ausgebildet ist, und ein zweites Zahnrad (47), das auf einer Fläche der zweiten Scheibe (38) derart ausgebildet ist, dass es dem ersten Zahnrad (46) gegenüberliegt, umfassen, und
wobei das erste Zahnrad (46) und das zweite Zahnrad (47) durch Inkontaktbringen der ersten Scheibe (37) und der zweiten Scheibe (38) in einer axialen Richtung miteinander in Eingriff gebracht werden.

## Revendications

1. Siège de véhicule (1), comportant :
un cadre de dossier de siège (8) ;
un ensemble de moyeu (9, 49, 59) situé dans le cadre de dossier de siège (8) ; et
une pluralité de sangles (15, 16) tirées radialement entre l'ensemble de moyeu (9, 49, 59) et le cadre de dossier de siège (8),
**caractérisé en ce que** :
l'ensemble de moyeu (9, 49, 59) comprend un élément de moyeu (10, 51, 60, 73) ayant une pluralité de trous traversants (14, 55, 61, 78) pour passer les sangles à travers (15, 16), et un mécanisme d'ajustement (35, 50, 62) qui est configuré pour ajuster une position verticale de l'élément de moyeu (10, 51, 60, 73).

2. Siège de véhicule (1) selon la revendication 1, dans lequel le mécanisme d'ajustement (35, 50, 62) comprend :
un mécanisme de guidage (29, 30, 37, 38) qui est configuré pour guider l'élément de moyeu (10, 51, 60, 73) dans une direction verticale ; et
un mécanisme de positionnement (45) qui est configuré pour fixer la position verticale de l'élément de moyeu (10, 51, 60, 73).

3. Siège de véhicule (1) selon la revendication 2,
dans lequel le mécanisme de guidage (29, 30, 37, 38) comprend une première sangle de guidage (29) et une deuxième sangle de guidage (30) tirées verticalement à l'intérieur du cadre de dossier de siège (8), une première poulie (37) ayant une première gorge (41), une deuxième poulie (38) ayant une deuxième gorge (43), et un élément de support (39, 40, 46, 47, 56, 71, 79) qui est configuré pour supporter coaxialement l'élément de moyeu (10, 51, 60, 73), la première poulie (37) et la deuxième poulie (38), et
dans lequel la première sangle de guidage (29) est enroulée autour de la première gorge (41) de la première poulie (37), et la deuxième sangle de guidage (30) est enroulée autour de la deuxième gorge (43) de la deuxième poulie (38).

4. Siège de véhicule (1) selon la revendication 3,
dans lequel une extrémité supérieure (29a) de la première sangle de guidage (29) est fixée sur la partie latérale supérieure (8a) du cadre de dossier de siège (8) et une extrémité inférieure (29b) de la première sangle de guidage (29) est fixée sur une partie latérale inférieure (8c) du cadre de dossier de siège (8) dans une zone droite (X1) du cadre de dossier de siège (8),
dans lequel une extrémité supérieure (30a) de la deuxième sangle de guidage (30) est fixée sur la partie latérale supérieure (8a) du cadre de dossier de siège (8) et une extrémité inférieure (30b) de la deuxième sangle de guidage (30) est fixée sur la partie latérale inférieure (8c) du cadre de dossier de siège (8) dans une zone gauche (X2) du cadre de dossier de siège (8), et
dans lequel une partie intermédiaire (29c) de la première sangle de guidage (29) est enroulée autour de la première gorge (41) de la première poulie (37) d'une direction prédéterminée, et une partie intermédiaire (30c) de la deuxième sangle de guidage (30) est enroulée autour de la deuxième gorge (43) de la deuxième poulie (38) dans une direction opposée.

5. Siège de véhicule (1) selon la revendication 4,
dans lequel l'élément de moyeu (10, 51, 60, 73) comprend un élément de cage (10) ayant un cadre annulaire avant (11), un cadre annulaire arrière (12) et les trous traversants (14) formés entre le cadre annulaire avant (11) et le cadre annulaire arrière (12), et
dans lequel le cadre annulaire arrière (12) est monté sur l'élément de support (40) de la première poulie (37) d'une manière rotative.

6. Siège de véhicule (1) selon la revendication 4 ou 5, dans lequel le mécanisme de positionnement (45) comprend des éléments de couplage (46, 47) qui sont engagés l'un avec l'autre pour annuler des forces de rotation de la première poulie (37) et de la deuxième poulie (38).

7. Siège de véhicule (1) selon la revendication 6,
dans lequel les éléments de couplage (46, 47) comprennent un premier pignon (46) formé sur une face de la première poulie (37), et un deuxième pignon (47) formé sur une face de la deuxième poulie (38) pour être opposé au premier pignon (46), et
dans lequel le premier pignon (46) et le deuxième pignon (47) sont engagés l'un avec l'autre en amenant la première poulie (37) et la deuxième poulie (38) en contact l'une avec l'autre dans une direction axiale.
